# EUROPÄISCHE PATENTSCHRIFT

(11) **EP 0 396 057 B1**
(45) Veröffentlichungstag und Bekanntmachung des Hinweises auf die Patenterteilung: **17.08.1994**
(21) Anmeldenummer: 90108141.4
(22) Anmeldetag: 27.04.1990
(51) Int. Cl.: C02F 3/30

(54) **Steuerungsanordnung und Verfahren zur Steuerung der mikrobiellen Behandlung von Abwässern**
Control arrangement and process for controlling microbiological treatment of waste water
Procédé et configuration de commande pour diriger un traitement microbiologique d'eaux usées

(30) Priorität: 29.04.1989 DE 3914357
(43) Veröffentlichungstag der Anmeldung: 07.11.1990
(73) Patentinhaber: Fröse, Gero, D-38100 Braunschweig (DE)
(72) Erfinder: Fröse, Gero, D-38100 Braunschweig (DE)
(74) Vertreter: Lins, Edgar, Dipl.-Phys. Dr.jur.

(56) Entgegenhaltungen:
- EP-A- 0 069 353
- WAT. SCI. TECHNOLOGY, Band 17, 1985, Seiten 259-281, IAWPRC, GB; F.A. KOCH etal.: "Oxidation-reduction potential - a tool for monitoring, control andoptimization of biological nutrient removal systems"
- CHEMICAL ABSTRACTS, Band 112, Nr. 12, 19. März 1990, Seite 352, ZusammenfassungNr. 104290s, Columbus, Ohio, US; & JP-A-01 70 198 (HITACHI PLANT ENGINEERING AND CONSTRUCTION CO., LTD) 15-03-1989
- CHEMICAL ABSTRACTS, Band 112, nr. 8, 19. Februar 1990, Seite 382,Zusammenfassung Nr. 62023z, Columbus, Ohio, US; M. FUKAGAWA et al.: "A study onbiological treatment with control of redox potential",& UBE KOGYO KOTO SENMON GAKKO KENGYU HOKOKU 1988, 34,51-7

## Beschreibung

Die Erfindung betrifft ein Verfahren zur Steuerung der mikrobiellen Denitrifikationsbehandlung von Abwässern, bei dem in dem der Behandlung unterworfenen Abwasser das Redox-Potential gemessen und ausgewertet wird und das Ende der Denitrifikationsbehandlung dadurch festgestellt wird, daß ein starker Abfall des Redox-Potentials vorliegt.

Es hat sich die Erkenntnis durchgesetzt, daß zur Vermeidung einer großen Nitratbelastung von Grundwasser und Flüssen stickstoffhaltige Verbindungen aus dem Abwasser wahrend der Behandlung in einer Kläranlage eliminiert werden sollten. Hierfür werden biochemische Prozesse ausgenutzt, mit denen einerseits eine Oxidation des im Wasser vorliegenden Ammoniums zu Nitrat (Nitrifikation) und andererseits eine Reduktion des Nitrats zu molekularem Stickstoff (Denitrifikation) durchgeführt wird, der dann in gasförmiger Form in die Atmosphäre schadlos entweichen kann. Verfahrenstechnisch ist problematisch, daß die Nitrifikation nur bei Anwesenheit von gelöstem Sauerstoff, die Denitrifikation dagegen nur im sauerstofffreien Milieu abläuft.

Es ist daher bekannt, die Nitrifikation und Denitrifikation in getrennten Reaktionsräumen, also beispielsweise Becken einer Kläranlage, durchzuführen. Das der Nitrifikation unterworfene Abwasser wird anschließend in den Reaktionsraum für die Denitrifikation gepumpt.

Es ist auch bekannt, die Nitrifikation und Denitrifikation in demselben Reaktionsraum ablaufen zu lassen, jedoch zu unterschiedlichen Zeiten. Hierzu wird der Belebtschlamm intermittierend belüftet, so daß im zeitlichen Wechsel geeignete Milieubedingungen sowohl für die Nitrifikation (intensive Belüftung, Anwesenheit von gelöstem Sauerstoff) als auch für die Denitrifikation (schwache oder abgeschaltete Belüftung, Abwesenheit von gelöstem Sauerstoff) geschaffen werden.

Es ist üblich, die Dauer der Nitrifikationsbehandlung und der Denitrifikationsbehandlung mit Schaltuhren zu steuern, insbesondere bei der intermittierenden Behandlung, bei der Nitrifikation und Denitrifikation in demselben Reaktionsraum zeitlich nacheinander ablaufen.

Es liegt nahe, eine direkte Steuerung des Umschaltzeitpunktes zwischen Denitrifikation und Nitrifikation durch die Messung der Parameter Ammoniumgehalt bzw. Nitratgehalt durchzuführen. Die hierfür erforderlichen kontinuierlich messenden Analysegeräte sind vorhanden, erfordern aber einen schwebstofffreien Probenstrom, der nur durch Ultrafiltration gewonnen werden kann. Eine derartige Steuerung ist daher insbesondere für kleine Anlagen nicht rentabel.

Neben den Stickstoffverbindungen sind Phosphate entscheidend an der Überdüngung der Gewässer beteiligt. Auch diese Stoffe sollten daher in Kläranlagen möglichst weitgehend entfernt werden.

Es ist bekannt, daß die Phosphat-Elimination aus Abwasser sowohl auf chemischem Wege durch Fällung als auch biologisch durch die in Kläranlagen vorhandenen Mikroorganismen erfolgen kann.

Die biologische Elimination setzt voraus, daß die Mikroorganismen im zeitlichen Wechsel einem sauerstoffhaltigen (aeroben) und einem völlig sauerstofffreien (anaeroben) Milieu ausgesetzt werden.

Es ist üblich, das aerobe und das anaerobe Milieu in getrennten Reaktionsräumen zu schaffen, die nacheinander vom Abwasser-Belebtschlammgemisch durchflossen werden. Möglich ist jedoch auch, die Milieubedingungen zeitlich intermittierend in nur einem Reaktionsraum herzustellen, der nur zeitweise mit Sauerstoff versorgt wird.

Aus WAT. SCI. TEC., Vol. 17 (1985), Seiten 259 bis 281 ist bekannt, daß die Überwachung der bakteriellen Aktivität in einem Reaktor, insbesondere in einer anaeroben Phase, mit Hilfe des Redox-Potentials vorgenommen werden kann. Dabei ist darauf verwiesen worden, daß das Redox-Potential eine sehr komplexe Meßgröße ist und von vielen Parametern abhängt. In den verschiedenen Phasen einer Abwasserbehandlung kann das Redox-Potential gleiche Werteannehmen. Ein charakteristisches Merkmal des Redox-Potentials ist jedoch, daß es am Ende der Denitrifikationsphase der Abwasserbehandlung einen starken Abfall aufweist. Ein ähnlicher starker Abfall läßt sich allerdings auch beispielsweise am Ende der aeroben Phase feststellen, wenn der Gehalt des gelösten Sauerstoffs in dem Abwasser auf 0 abfällt. Dennoch wird in dem genannten Aufsatz vorgeschlagen, die gefundenen Eigenschaften des Redox-Potentials zur Überwachung und ggf. Steuerung der Abläufe eines biologischen Prozesses zu verwenden. Die berichteten Untersuchungen haben allerdings auch ergeben, daß verschiedene Zusätze einen erheblichen Einfluß auf das gemessene Redox-Potential haben.

In der Praxis hat sich ergeben, daß die Steuerung der Abwasserbehandlung auch mit dem festgestellten erheblichen Abfall des Redox-Potentials am Ende der Denitrifikationsphase nicht ohne weiteres möglich ist. Es hat sich gezeigt, daß nicht nur das Redox-Potential eine aus vielen Einflüssen zusammengesetzte komplexe Größe ist, sondern daß auch das zu behandelnde Abwasser die unterschiedlichsten Zusätze aufweisen kann, so daß mehrere Abfälle des Redox-Potentials auftreten, die zu Fehlinterpretationen Anlaß geben können. Die in der Praxis gefundenen Ergebnisse entsprachen daher nicht der in dem genannten Aufsatz dargelegten optimistischen Erwartung der Ausnutzbarkeit des Redox-Potentials für die Steuerung von Abwasserbehandlungen.

Überraschenderweise hat es sich gezeigt, daß die schwierig beherrschbare Meßgröße "Redox-Potential" zur Steuerung der Behandlungsvorgänge für eine komplexe Zusammensetzung, wie Abwasser sie darstellt, mit einer einfachen Meßtechnik möglich ist, wenn das Meßkriterium des starken Abfalls des Redox-Potentials erfindungsgemäß dadurch verifiziert wird, daß sich der Absolutwert des Redox-Potentials innerhalb eines vorbestimmten Intervalls befindet ("Redox-Fenster") und/oder eine Sauerstoffreiheit des Abwassers gemessen worden ist.

Die bei der Denitrifikation aufgenommenen Redox-Verläufe lassen sich auch zur Steuerung der biologischen Phosphat-Entfernung nutzen, wenn nach dem Auftreten des Redox-Knickpunktes, der das Ende der Denitrifikation signalisiert, die Sauerstoffversorgung nicht sofort, sondern verzögert eingeschaltet wird. Das für die verstärkte biologische Phosphat-Entfernung erforderliche anaerobe Milieu entsteht, wenn sowohl der gelöste als auch der im Nitrat oder Nitrit gebundene Sauerstoff vollständig verschwunden ist, also am Ende einer Denitrifikationsbehandlung. Die Verzögerung kann bewirkt werden durch (siehe Fig. 3)
- Vorgabe einer Verzögerungszeit Δt.
- Vorgabe eines absoluten Redox-Grenzwertes, der nach dem Knickpunkt erreicht werden muß.
- Vorgabe einer Redox-Differenz Δ Redox, die nach dem Knickpunkt durchlaufen werden muß.

Die Erfindung betrifft ferner eine Steuerungsanordnung für die mikrobielle Denitrifikationsbehandlung von Abwässern mit einem Sensor für das Redox-Potential, einer Auswertungsschaltung für die Meßwerte des Sensors und einem Detektor für eine starke Abnahme des Redox-Potentials, die erfindungsgemäß gekennzeichnet ist durch eine an einen Sensor angeschlossene Auswertungsanordnung für ein weiteres Meßkriterium für das Ende der Denitrifikationsphase und eine an den Detektor und an die Auswertungsanordnung angeschlossene Schalteinheit für die Beeinflussung der Behandlung.

Der Detektor für die starke Abnahme des Redox-Potentials weist dabei vorzugsweise eine Differenzierstufe zur Bildung der ersten Ableitung und/oder der zweiten Ableitung des Meßsignals des Sensors auf. Dadurch läßt sich der "Redox-Knick" sicher detektieren.

Es hat sich gezeigt, daß die besten Meßergebnisse erhalten werden, wenn das Redox-Potential im Belebtschlamm gemessen wird, also der Sensor für das Redox-Potential im Belebtschlammbecken angeordnet ist.
Die Erfindung soll im folgenden anhand eines in der Zeichnung dargestellten Ausführungsbeispiels näher erläutert werden. Es zeigen:
- Figur 1 -: eine schematische Darstellung der erfindungsgemäßen Steuerungsanordnung
- Figur 2 -: gemessene Signalverläufe für die Nitrat-Konzentration und die Redox-Spannung während des Denitrifikationsprozesses sowie zur Auswertung dienende Kurven der ersten und zweiten Ableitung der Redox-Spannung.
- Figuren 3 - 5: Redox-Spannungsverlauf für Behandlungen, bei denen nach Erreichen eines Knicks die Sauerstoffversorgung verzögert eingeschaltet wird.

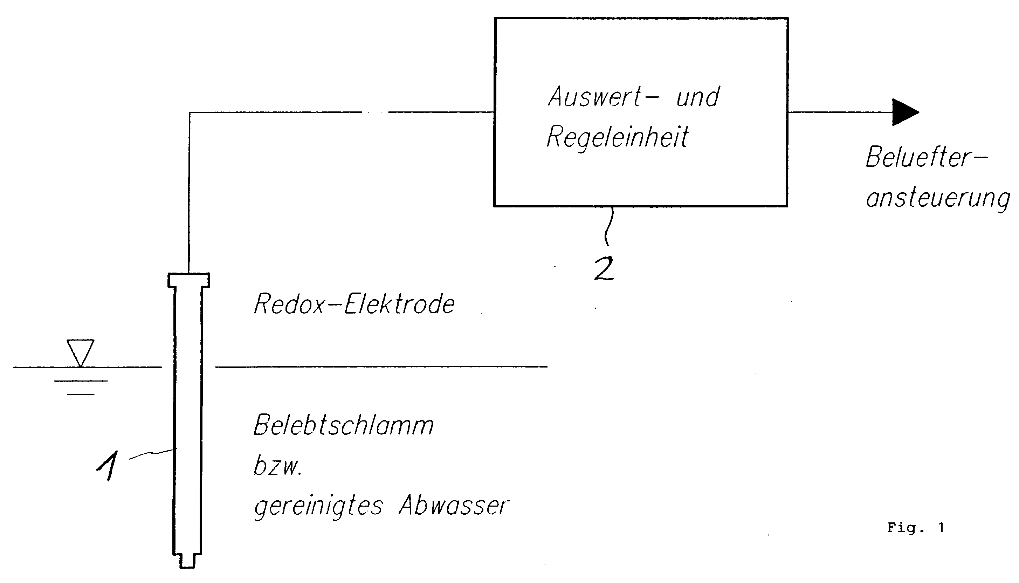

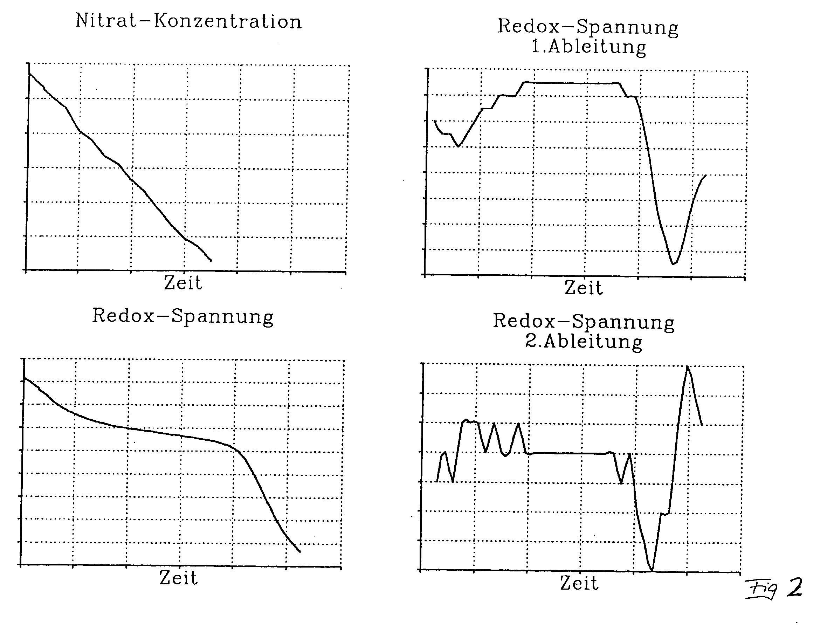

Figur 1 zeigt schematisch eine in das gereinigte Abwasser bzw. vorzugsweise in den Belebtschlamm ragende Redox-Elektrode 1, die mit einer Auswert- und Regeleinheit 2 verbunden ist, deren Funktion anhand der Figur 2 näher erläutert wird. Die dargestellte Anordnung ist für eine intermittierende Denitrifikationsanlage vorgesehen und steuert somit eine (nicht dargestellte) Belüftungseinrichtung, über die der Belebtschlamm mit Sauerstoff versorgt werden kann. Am Ende der Denitrifikationsbehandlung wird die Belüftungseinrichtung eingeschaltet, so daß dem Schlamm Sauerstoff zur Nitrifikationsbehandlung zugeführt wird und das im Wasser gelöste Ammonium in Nitrat umgesetzt wird.

Figur 2 zeigt den Verlauf der Nitrat-Konzentration während der Denitrifikationsbehandlung. Diese nimmt stetig ab und geht am Ende der Denitrifikationsbehandlung gegen null.

Der darunter dargestellte Verlauf der Redox-Spannung, also des Meßsignals der Redox-Elektrode 1, zeigt eine stetige Abnahme der Redox-Spannung bis zu dem Zeitpunkt, an dem die Nitrat-Konzentration praktisch null ist. Etwas gegenüber diesem Zeitpunkt versetzt ist mit der Redox-Elektrode 1 eine deutliche Zunahme des Abfalls der Redox-Spannung ("Redox-Knick") erkennbar. Das Auftreten dieses "Redox-Knicks" wird erfindungsgemäß als Steuerparameter für die Beendigung der Denitrifikationsbehandlung eingesetzt. Um diesen "Redox-Knick" sicher detektieren zu können, wird in der Auswert-und Regeleinheit die erste und die zweite Ableitung der Redox-Spannung gebildet. Beide zeigen übereinstimmend zeitlich dem Zeitpunkt etwas nachlaufend, zu dem die Nitrat-Konzentration praktisch null wird, einen starken Abfall. Die übereinstimmenden Abfälle der Kurven der ersten und der zweiten Ableitung bilden ein sicheres Merkmal für das Auftreten des "Redox-Knicks" und eignen sich daher als Steuerkriterium für die Beendigung der Denitrifikationsbehandlung.

Da nicht auszuschließen ist, daß ein ähnlich starker Abfall der Redox-Spannung aufgrund anderer Effekte im Abwasser zu anderen Zeitpunkten eintritt, die nichts mit dem Ende der Denitrifikationsbehandlung zu tun haben, ist es zweckmäßig, als weiteres Abschaltkriterium das Absinken der Redox-Spannung unter einem experimentell vorermittelten Schwellwert zu verwenden. Eine Fehlsteuerung könnte alternativ hierzu auch durch die Bestimmung des Sauerstoffgehalts des Abwassers erreicht werden, da ein Kriterium für die Denitrifikationsbehandlung die Anwesenheit von Sauerstoff ist. Als Schaltkriterium käme daher auch der Meßwert null für den O₂-Gehalt des Abwassers in Frage.

Der hier auftretende Zeitversatz zwischen dem Erreichen des Nullpunkts für die Nitrat-Konzentration und das Auftreten des "Redox-Knicks" beträgt größenordnungsmäßig eine bis drei Minuten. Dieser Zeitversatz ist für die Steuerung unerheblich und liegt innerhalb der Steuerungsdämpfung, die zur Vermeidung von Fehlsteuerung aufgrund von Störimpulsen o.ä. zweckmäßigerweise vorgesehen wird.

Die Figuren 3 bis 5 zeigen Kurvenverläufe für das Redox-Potential, bei denen das Auftreten des beschriebenen Knickpunktes verdeutlicht ist. Zur Aufrechterhaltung eines anaeroben Milieus für die Phosphat-Entfernung wird das Einschalten der Sauerstoffversorgung nach dem Knickpunkt verzögert. Gemäß Figur 3 ist hierfür eine vorbestimmte Zeispanne Δt vorgesehen. Nach Ablauf dieser Zeitspanne Δt wird die Sauerstoffversorgung eingeschaltet.

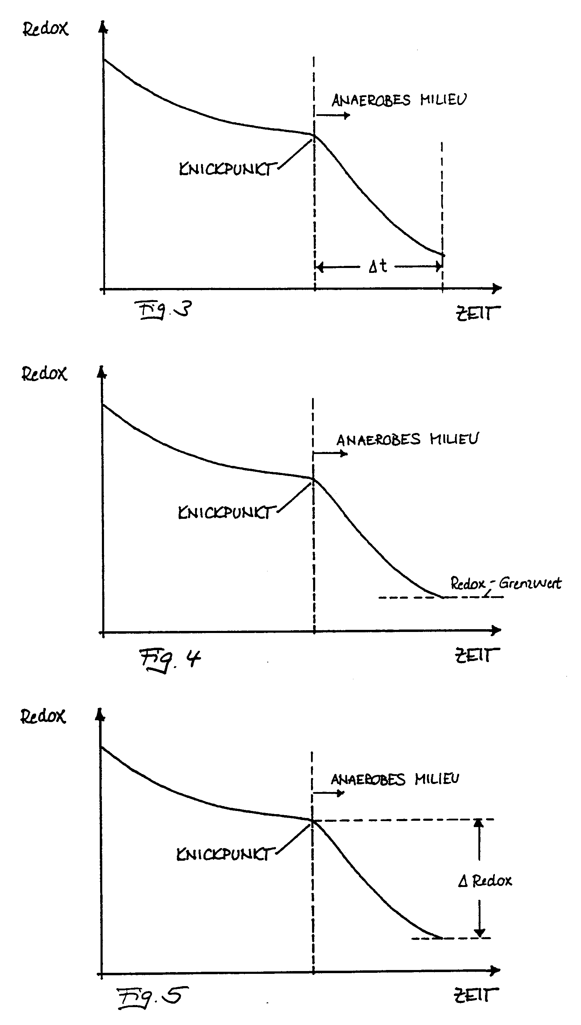

Gemäß Figur 4 wird das anaerobe Milieu so lange aufrechterhalten, bis ein absoluter Redox-Grenzwert unterschritten wird.

Gemäß Figur 5 richtet sich die Dauer des anaeroben Milieus nach dem Erreichen eines Mindestwertes für die Differenz der Redox-Spannungen nach den Knickpunkt Δ Redox.

Alle drei Steuerungsmöglichkeiten stehen ohne weiteres zur Verfügung und erlauben zusätzlich zu der Denitrifikation eine Phosphat-Entfernung aus dem Abwasser.

## Patentansprüche

1. Verfahren zur Steuerung der mikrobiellen Denitrifikationsbehandlung von Abwässern, bei dem in dem der Behandlung unterworfenen Abwasser das Redox-Potential gemessen und ausgewertet wird und das Ende der Denitrifikationsbehandlung dadurch festgestellt wird, daß ein starker Abfall des Redox-Potentials vorliegt, **dadurch gekennzeichnet, daß** der starke Abfall des Redox-Potentials nur dann als Abschaltkriterium für die Denitrifikationsbehandlung verwendet wird, wenn sich der Absolutwert des Redox-Potentials innerhalb eines vorbestimmten Intervals befindet und/oder eine Sauerstoffreiheit des Abwassers gemessen worden ist.

2. Steuerungsanordnung für die mikrobielle Denitrifikationsbehandlung von Abwässern mit einem Sensor (1) für das Redox-Potential, einer Auswertungsschaltung für die Meßwerte des Sensors (1) und einem Detektor für eine starke Abnahme des Redox-Potentials, dadurch gekennzeichnet, daß die Auswertungsschaltung eine Vergleichsanordnung zur Feststellung, ob der Absolutwert des Redox-Potentials innerhalb eines vorgegebenen Intervalls liegt, aufweist und das die Vergleichsanordnung zusammen mit dem Detektor über eine UND-Verknüpfung mit einer Schalteinheit verbunden ist.

3. Steuerungsanordnung für die mikrobielle Denitrifikationsbehandlung von Abwässern mit einem Sensor (1) für das Redox-Potential, einer Auswertungsschaltung für die Meßwerte des Sensors und einem Detektor für eine starke Abnahme des Redox-Potentials, gekennzeichnet durch einen Sensor für den O₂-Gehalt des Abwassers, dessen Ausgangssignal mit dem Ausgangssignal des Detektors über eine UND-Verknüpfung mit einer Schalteinheit verbunden ist.

4. Steuerungsanordnung nach Anspruch 2 und/oder 3, dadurch gekennzeichnet, daß der Detektor für die starke Abnahme des Redox-Potentials eine Differenzierstufe zur Bildung der ersten Ableitung und/oder der zweiten Ableitung des Meßsignals des Sensors (1) aufweist.

## Claims

1. Process to control the microbial denitrification treatment of waste water, in which the redox potential in the waste water subjected to treatment is measured and evaluated and the end of the denitrification procedure established by the presence of a strong fall in the redox potential, characterized in that the strong fall in the redox potential is used as a disconnection criterion for the denitrification treatment only if the absolute value of the redox potential lies within a specified interval and/or an absence of oxygen in the waste water has been measured.

2. Control system for the microbial denitrification treatment of waste water with a sensor (1) for the redox potential, an evaluation circuit for the measurement values from the sensor (1) and a detector for a strong fall in the redox potential, characterized in that the evaluation circuit has a comparison device to establish whether the absolute value of the redox potential lies within a specified interval and that the comparison device together with the detector is connected to a switch unit via an AND link.

3. Control system for the microbial denitrification treatment of waste water with a sensor (1) for the redox potential, an evaluation circuit for the measurement values from the sensor (1) and a detector for a strong fall in the redox potential, characterized by a sensor for the O₂ content of the waste water, the output signal of which, with the output signal of the detector, is connected to a switch unit via an AND link.

4. Control system according to Claim 2 and/or 3, characterized in that the detector for the strong fall in redox potential has a differentiation stage to form the first derivative and/or the second derivative of the measurement signal of the sensor (1).

## Revendications

1. Procédé de commande du traitement microbien de dénitrification d'eaux résiduaires, conformément auquel on mesure et exploite le potentiel redox dans l'eau résiduaire soumise au traitement et on reconnaît la fin du traitement de dénitrification à une forte chute du potentiel redox, caractérisé en ce que la forte chute du potentiel redox ne s'utilise seulement comme critère d'arrêt du traitement de dénitrification qu'uniquement alors que la valeur absolue du potentiel redox se situe à l'intérieur d'un intervalle prédéterminé et/ou que l'on a mesuré que l'eau résiduaire est dépourvue d'oxygène.

2. Installation de commande pour le traitement microbien de dénitrification d'eaux résiduaires à l'aide d'un capteur (1) pour le potentiel redox, d'une commutation d'exploitation pour les valeurs mesurées du capteur (1) et un détecteur pour la forte chute du potentiel redox, caractérisée en ce que la commutation d'exploitation présente un dispositif comparateur destiné à constater ou à établir si la valeur absolue du potentiel redox se situe à l'intérieur d'un intervalle prédéterminé et en ce que le dispositif comparateur est raccordé en même temps que le détecteur avec une unité de commutation par l'intermédiaire d'une liaison ET.

3. Installation de commande pour le traitement microbien de dénitrification d'eaux résiduaires avec un capteur (1) du potentiel redox, une commutation d'exploitation pour les valeurs mesurées par le capteur et un détecteur pour la forte chute du potentiel redox, caractérisée par un capteur pour la teneur en O₂ de l'eau résiduaire, dont le signal de départ est relié au signal de sortie du détecteur par l'intermédiaire d'une liaison ET avec une unité de commutation.

4. Installation de commande selon l'une quelconque des revendications 2 et/ou 3, caractérisée en ce que le détecteur pour la forte chute du potentiel redox présente un étage de différenciation pour la formation de la première dérivation et/ou de la seconde dérivation du signal de mesure du capteur (1).
